# EUROPÄISCHE PATENTSCHRIFT

(11) **EP 0 502 846 B1**
(45) Veröffentlichungstag und Bekanntmachung des Hinweises auf die Patenterteilung: **03.11.1993**
(21) Anmeldenummer: 90910687.4
(22) Anmeldetag: 18.07.1990
(51) Int. Cl.: B60G 17/01, B60T 8/32, B60K 28/16

(54) **VERBUNDREGELSYSTEM FÜR KRAFTFAHRZEUGE**
COMBINED CONTROL SYSTEM FOR MOTOR VEHICLES
SYSTEME DE REGULATION COMBINEE POUR VEHICULES AUTOMOBILES

(30) Priorität: 28.11.1989 DE 3939292
(43) Veröffentlichungstag der Anmeldung: 16.09.1992
(73) Patentinhaber: ITT Automotive Europe GmbH, 60488 Frankfurt (DE)
(72) Erfinder: HOFFMANN, Michael, D-3550 Marburg (DE); ECKERT, Alfred, D-6500 Mainz 42 (DE); NEUMANN, Ulrich, D-6101 Rossdorf (DE); FENNEL, Helmut, D-6232 Bad Soden (DE); GIERS, Bernhardt, D-6101 Rossdorf 1 (DE); BLECKMANN, Hans-W., D-6350 Bad Nauheim 3 (DE); RIETH, Peter, D-6228 Eltville 1 (DE); KRANZ, Thomas, D-6365 Nieder-Rosbach (DE)
(86) Internationale Anmeldenummer: EP9001175
(87) Internationale Veröffentlichungsnummer: WO9108120

(56) Entgegenhaltungen:
- EP-A- 0 033 204
- EP-A- 0 270 893
- EP-A- 0 311 131
- DE-A- 3 917 245
- Automobiltechnische Zeitschrift, Band 92, Nr. 1, Januar 1990, (Stuttgart, DE), H. Henning: "Citroen XM V6", S. 22-27
- Machine Design, Band 59, Nr. 28, 26. November 1987, (Cleveland, Ohio, US), I. Ahmed et al.: "DSPs tame adaptive control", S. 125-129

## Beschreibung

Die Erfindung betrifft ein Verbundregelsystem für Kraftfahrzeuge, mit hydraulisch betätigten Stellgliedern einer Fahrwerksregelung, mit einer Blockierschutzregelung, mit einer Hilfsenergiequelle, mit Sensoren zur Erfassung von Meßgrößen und mit elektronischen Schaltkreisen zur Auswertung der Sensorsignale und zur Erzeugung von Stellsignalen für die Fahrwerks- und für die Blockierschutzregelung.

Fahrverhalten und Komfort eines Kraftfahrzeuges werden im wesentlichen durch Dämpfer und Federn bestimmt. Bei Abstimmung des Fahrwerks ist immer eine Kompromiß zwischen Sicherheit (minimale Radlastschwankungen) und Komfort (minimale Aufbaubeschleunigungen) einzugehen.

Für ABS/ASR-Anlagen gilt ähnliches, denn dort ist stets ein Kompromiß zwischen optimaler Beschleunigung bzw. Verzögerung und Fahrstabilität zu erreichen. Die beiden Ziele konkurrieren jedoch miteinander, da ein Rad, das maximales Längsmoment überträgt, keine stabilisierenden Querkräfte mehr übertragen kann, und umgekehrt. Ein weiteres Problem ist es, die Ursache von Raddrehgeschwindigkeitsänderungen zu erkennen, um eine optimale Regelung zu erzielen.

Durch Regelsysteme, die eine Veränderung der Dämpfungs- und Federrate erlauben, kann gegenüber konventionellen Fahrwerksauslegungen (feste Dämpfungs- und Federraten) sowohl die Sicherheit als auch der Komfort verbessert werden. Abhängig von Reaktionszeiten und Energiebedarf können die bekannten Systeme in drei Gruppen gegliedert werden:
a) adaptiv-passiv: Reaktionszeit größer als Systemzeit, geringer Energieverbrauch
b) semi-aktiv: Reaktionszeit kleiner als Systemzeit, geringer Energieverbrauch
c) aktiv: Reaktionszeit kleiner als Systemzeit, hoher Energieverbrauch

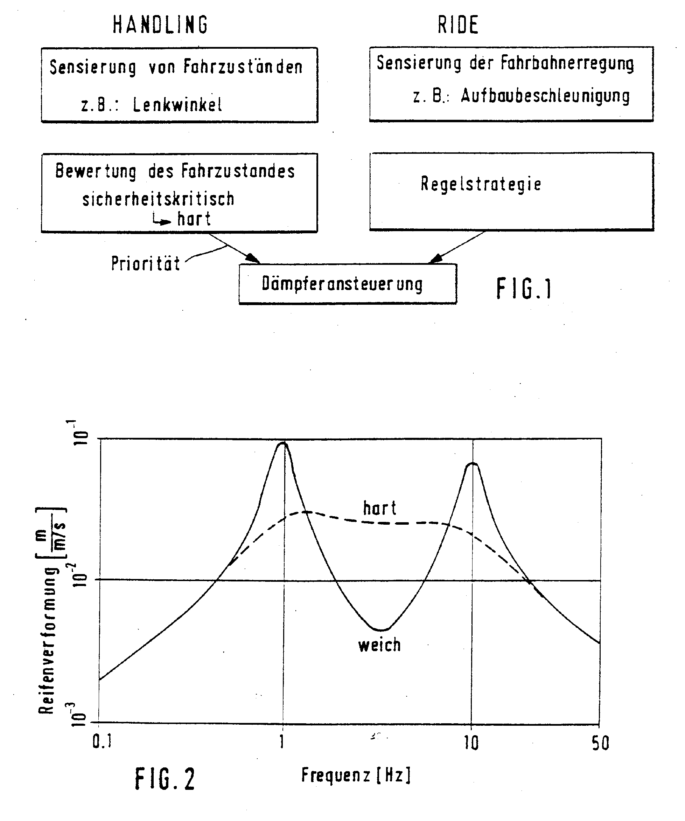

Das Schwingungsverhalten des Fahrzeuges wird durch zwei Anregungsquellen beeinflußt, nämlich einerseits durch Fahrbahnunebenheiten und andererseits durch Einflüsse des Fahrers. Während für den ersten Fall schon relativ fortgeschrittene Regelalgorithmen bestehen, wird der zweite Fall in bekannten Systemen durch eine reine Steuerung behandelt, eine Interaktion zwischen Fahrbahnerregungen und Fahrmanövern findet nicht statt. Wird infolge von Fahrmanövern eine sicherheitskritische Situation erkannt, wird grundsätzlich eine harte Dämpfereinstellung gewählt, in Figur 1 ist diese Regelstrategie schematisch dargestellt. Aus dem Frequenzgang für die Reifenverformung, die ein Meßwert für die Radlastschwankungen ist, wird deutlich, daß jedoch bei einer Fahrbahnerregung im Bereich zwischen Aufbau- und Radeigenfrequenz eine harte Dämpfereinstellung zu hohen Radlastschwankungen führt, dieser Sachverhalt ist in Figur 2 dargestellt.

Aus der EP-A-0033204 ist eine Niveauregelung bekannt, die als wesentliche Komponenten eine Hilfsenergiequelle, nämlich eine Hydraulikpumpe, elektrisch betätigte Hydraulikventile und hydraulische Stellelemente innerhalb der Radaufhängungen aufweist, mit denen die Höhe des Fahrzeug-Aufbaues eingestellt und insbesondere während einer Kurvenfahrt geregelt werden kann. Kurvenerkennungssensoren und eine elektronische Auswerte- sowie Ventil-Steuerungseinrichtung gehören ebenfalls zu der bekannten Niveauregelung. In dieser Schrift ist auch schon der Vorschlag zu finden, bei einem Fahrzeug, das sowohl eine solche Niveauregelung als auch eine Blockierschutzregelung besitzt, zumindest die Radsensoren für beide Ssysteme zu verwenden, um die Herstellungskosten zu senken. Es handelt sich also um eine gemeinsame Nutzung von bestimmten Komponenten, nicht um einen funktionsmäßigen Verbund beider Systeme.

Aus der DE 37 38 284 -Al ist eine semi-aktive Fahrwerksregelung bekannt, die sowohl hochfrequente Bewegungen der Radeigendynamik als auch niederfrequente Aufbaubewegungen wirkungsvoll beherrschen und eine entscheidende fahrdynamische Verbesserung gegenüber konventionellen Systemen erzielen soll.

Bisher ging man davon aus, daß Fahrwerksregelungen und ABS/ASR-Anlagen unabhängig voneinander weiterentwickelt und verbessert werden müßten, da an die verschiedenen Systeme grundsätzlich verschiedene Anforderungen gestellt werden. Die physikalischen Vorgänge, die zu beherrschen sind, unterscheiden sich sehr deutlich voneinander. Dieses Vorgehen hat jedoch zur Folge, daß für jede Regelanlage Daten erfaßt und verarbeitet werden müssen; außerdem beeinflußen sich die Systeme teilweise störend gegenseitig. In dem Artikel "Pkw-ABV-Bremssysteme mit weiteren integrierten Funktionen" (Automobil Industrie Nr. 5/89) wurde zwar schon vorgeschlagen einen Datenverbund und eine gemeinsame Hilfsenergiequelle für ABS/ASR und Fahrwerksregelung vorzusehen, wobei die Daten über einen Daten-Bus ausgetauscht werden, aber eine derartige Anlage mit vielen gleichartigen Sensoren, zahlreichen Datenleitungen und mehreren Auswerte- und Steuerschaltkreisen ist teuer und aufwendig.

Der Erfindung liegt daher die Aufgabe zugrunde, ein Verbundregelsystem für Kraftfahrzeuge zu schaffen, daß alle Anforderungen, die an eine Fahrwerksregelung und an eine Blockierschutz- und/oder Antriebsschlupfregelung gestellt werden, erfüllt, und das außerdem besonders preisgünstig herzustellen ist.

Es hat sich gezeigt, daß diese Aufgabe durch ein Verbundregelsystem der eingangs genannten Art gelöst werden kann, dessen Besonderheit darin besteht, daß dieses ein aktives oder semi-aktives Fahrwerksregelungssystem mit regelbaren Stoßdämpfern und ein Blockierschutz- und/oder Antriebsschlupfregelsystem mit Bremsdruckmodulatoren oder Bremsdruck-Steuerventilen umfaßt, daß Auswerte- und Steuerschaltkreise zur Verarbeitung von Signalen, die dem Fahrwerksregelung- und dem Blockier schutz-/Antriebsschlupfregelungssystem gemeinsam zugeordnete Sensoren abgeben, vorhanden sind, daß in den Auswerteschaltkreisen aus Sensorsignalen bzw. Meßgrößen, die die Fahrstabilität des Fahrzeugs beeinflussen, ein Sicherheitsniveau ermittelt wird und daß in den Steuerschaltkreisen in Abhängigkeit von dem ermittelten Sicherheitsniveau und von dem Bewegungsverhalten des Fahrzeugs und der Räder Stell- oder Betätigungssignale zur Fahrwerks- und Blockierschutz-/Antriebsschlupf-Regelung gewonnen werden. Die Höhe des Sicherheitsniveaus gibt an, welche Dämpfkraft in der jeweiligen Situation zur Aufrechterhaltung der Fahrstabilität erforderlich ist. Bei einem hohen Sicherheitsniveau, das sich z.B. bei einer Kurvenfahrt, durch Bremsvorgänge während einer Kurvenfahrt, unebene Fahrbahn usw. ergeben kann, ist eine harte Dämpfkrafteinstellung notwendig, während bei niedrigem Sicherheitsniveau zur Erzielung eines hohen Fahrkomforts eine weiche Dämpfkrafteinstellung zulässig ist.

Das erfindungsgemäße Verbundregelsystem zeichnet sich nicht nur durch einen verringerten Herstellungsaufwand, sondern auch durch eine erhebliche Verbesserung der Regelsysteme aus. Es wird nicht nur eine gemeinsame Benutzung bestimmter Komponenten, wie Sensoren, Schaltungsteile usw., sondern darüber hinaus ein funktionsmäßiger Verbund beider Systeme erreicht. Die Möglichkeit einer erweiterten Signal-Korrelation führt zu einer weitergehenden Absicherung der Regelentscheidung, was die Systemzuverlässigkeit erhöht. Bei einer Bremsung auf unebener Fahrbahn kann die ABS-Anlage schon in Betrieb gehen, bevor ein Rad zu Blockieren beginnt, da die Schaltkreise so ausgebildet werden können, daß sie in diesem Fall auch einen schlechten Fahrbahnbelag "erwarten". Oder man legt die Schaltkreise so aus, daß im Fall einer Blockierschutz- oder Antriebsschlupfregelung die Dämpfkraftverstellung stets für maximalen Fahrbahnkontakt, d.h. minimale Radlastschwankungen, sorgt. Weiterhin ist es von Vorteil, wenn die Ansprechschwellen oder die Druckgradienten der Blockierschutz- oder Antriebsschlupfregelung auf die Fahrwerksregelung abgestimmt werden.

Eine vorteilhafte Weiterbildung der Erfindung sieht vor, die Auswerte- und Steuerschaltkreise in einem Bauelement, beispielsweise einem Mikrochip, anzuordnen. Diese Maßnahme ist platzsparend und erlaubt sehr schnelle Datenverarbeitung.

Besonders günstig ist es, wenn die Sensoren zumindest einige der folgenden Größen erfassen bzw. Daten zu ihrer Ermittlung aufnehmen: Fahrzeuglängsgeschwindigkeit, Drosselklappenstellung und/oder Motormoment, Bremsdruck und/oder Pedalweg, Radvertikalgeschwindigkeit, Raddrehgeschwindigkeit, Aufbaugeschwindigkeit und Beladungszustand. Die meisten dieser Größen werden von mehreren der am Verbund beteiligten Regelanlagen benötigt. Das heißt, es ist eine deutliche Kostensenkung durch mehrfache Verwendung von nur einmal erfaßten Daten möglich.

Es ist also nicht nur besonders vorteilhaft und preisgünstig, eine gemeinsame Steuereinrichtung und/oder gemeinsame Sensoren für alle Anlagen zu verwenden, sondern bringt neben einer erhöhten Sicherheit im Bereich der Fahrwerksregelung auch erhöhten Komfort mit sich.

Anhand einiger Beispiele werden einzelne Systemverbesserungen erläutert. Wird etwa zur Bekämpfung des Bremsnickens der für ABS sensierte Bremspedalweg verwendet, so kann das Verbundregelsystem bei gleicher Reaktionsschnelligkeit besser reagieren als eine herkömmliche Fahrwerksregelung. Denn im erläuterten Fall wird die Aktion (Pedalbetätigung) und im zweiten Fall in der Regel die Reaktion (Bremsdruck bzw. Fahrzeuglängs- und/oder -vertikalgeschwindigkeit) sensiert. Ähnliches gilt für das Anheben beim Beschleunigen, wenn Drosselklappenstellung bzw. Motormoment ermittelt werden.

Weiterhin ist es günstig, wenn ABS- und/oder ASR-Anlagen Lenkwinkelinformation erhalten, da andernfalls die Zustände Bremsen in der Kurve und Bremsen auf unterschiedlichen Reibwerten je Fahrzeugseite nicht eindeutig erkannt und behandelt werden können. Dies ist jedoch zur Giermomentsbeeinflußung notwendig.

Für die ASR-Funktion ist die Kurvenerkennung ebenfalls von Bedeutung, da im Falle hoher Querbeschleunigungen das maximal mögliche Antriebsmoment nicht ausgenutzt werden darf, um ausreichende stabilisierende Seitenführungskräfte aufbringen zu können. Mit der Einbindung der Lenkwinkelinformation kann eine sichere Kurvenerkennung und damit eine verbesserte ASR-Funktion erreicht werden.

Auch der Beladungszustand verändert das Fahrverhalten und wird daher von der Fahrwerkregelkomponente berücksichtigt. Für Fahrzeuge mit hohem Zuladungsanteil und einer Vierkanal-ABS-Regelung kann jedoch auch die beladbare Achse beladungsabhängig geregelt werden. Dabei bietet sich für den unbeladenen Zustand eine "select-low"- und für den beladenen Zustand eine Einzelrad-Regelung an.

Die in weiteren Unteransprüchen beschriebenen Ausführungsformen werden im folgenden anhand der Zeichnungen und Diagramme erläutert. Es zeigen:
- Figur 1: schematisch das Regelverhalten einer bekannten Fahrwerksregelung (Stand der Technik)
- Figur 2: den Frequenzgang der Reifenverformung für zwei ver chiedene Dämpfereinstellungen (Stand der Technik)
- Figur 3: im Blockschaltbild ein Ausführungsbeispiel eines erfindungsgemäßen Verbundregelsystems
- Figur 4: schematisch einen semi-aktiven Stoßdämpfer
- Figur 5: den Frequenzgang von Aufbaubeschleunigung (a) und Reifenverformung (b) bei einer semi-aktiven und verschiedenen passiven Dämpfereinstellungen
- Figur 6: den Frequenzgang der Reifenverformung (a) und der Aufbaubeschleunigung (b), wobei aktiver und passiver Dämpfungsanteil gegenüber Figur 5 modifiziert wurden
- Figur 7: den Frequenzgang von Reifenverformung (a) und Aufbaubeschleunigung (b), wobei die Modifikation der Dämpfereinstellung nur im Bereich zwischen den beiden Eigenfrequenzen vorgenommen wurde
- Figur 8: ein Kraftfahrzeug mit einer möglichen Ausführungsform eines erfindungsgemäßen Verbundregelsystem

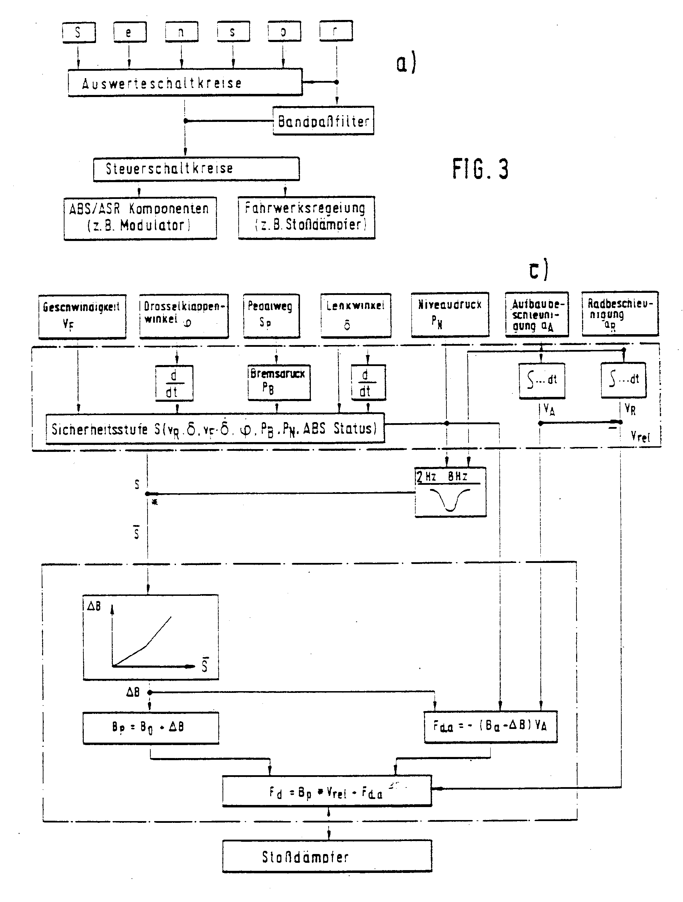

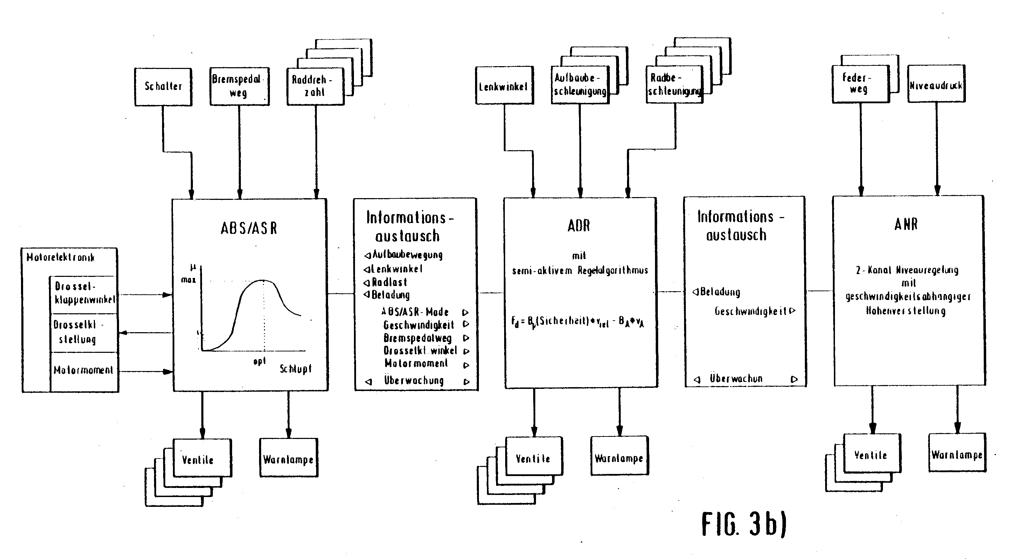

Figur 3 zeigt im Blockschaltbild ein Ausführungsbeispiel eines erfindungsgemäßen Verbundregelsystems. In Figur 3a sind die wichtigsten Elemente und ihre Verknüpfungen dargestellt. Die Ausgangssignale der Sensoren werden den Auswerteschaltkreisen und eines dieser Ausgangssignale zusätzlich einem Bandpaßfilter zugeführt. Die Ausgangssignale von Bandpaßfilter und Auswertschaltkreisen werden miteinander verknüpft und bilden das Eingangssignal der Steuerschaltkreise. Letztere geben schließlich Steuersignale an die ABS/ASR-Komponenten und die Fahrwerksregelung ab. In Figur 3b ist eine mögliche Ausführungsform dargestellt und der Verbund zwischen Anti-Blockier-System (ABS), Antriebs-Schlupf-Regelung (ASR), Automatischer-Dämpfkraft-Regelung (ADR) sowie Automatischer-Niveau-Regelung (ANR) zu erkennen. Anstelle der gezeigten Radbeschleunigungssensoren können auch Weggeber verwendet werden, die die Federwegsensoren überflüssig machen. Figur 3c zeigt den die Dämpfungsregelung betreffenden Teil aus den Figuren 3a und b im Detail. Gestrichelt sind die Einheiten zusammengefaßt, die die Auswerte- bzw. Steuerschaltkreise ausmachen. Von den Sensoren werden folgende Größen erfaßt: Geschwindigkeit v_{F} des Fahrzeugs, Drosselklappenwinkel φ, Pedalweg s_{P}, Lenkwinkel δ , Niveaudruck p_{N}, Aufbaubeschleunigung a_{A} und Rad(vertikal)beschleunigung a_{R}. Diese Größen werden teilweise zunächst integriert oder differenziert bzw. aus dem Pedalweg s_{P} ein Bremsdruck P_{B} ermittelt und anschließend bis auf die Beschleunigungen/Geschwindigkeiten von Rädern und Aufbau zur Ermittlung des Sicherheitsniveaus S errechnet. Aus Aufbau- und Radvertikalgeschwindigkeit wird eine Relativgeschwindigkeit vᵣₑₗ ermittelt.

Die Relativgeschwindigkeit und die Aufbaugeschwindigkeit werden den Steuerschaltkreisen direkt zugeleitet. Außerdem werden die Ausgangssignale der Radbeschleunigungsensoren dem Bandpaßfilter zugeführt, dessen Grenzfrequenz in Abhängigkeit vom Ausgangssignal des Niveaudrucksensors variabel ist. Dessen Ausgangssignal wird mit dem Ausgangssignal der Stufe, die das Sicherheitsniveau S ermittelt, multipliziert und ebenfalls den Steuerschaltkreisen zugeführt. Dort wird zunächst jedem modifizierten Sicherheitsniveau S̅ eine Dämpferveränderung ΔB zugeordnet. Dieses ΔB wird nun einerseits zum normalen passiven Dämpferanteil Bₒ addiert und liefert so den passiven Dämpferanteil Bₚ. Weiterhin wird der aktive Dämpferanteil Bₐ um ΔB vermindert und mit der negativen Aufbaugeschwindigkeit v_{A} multipliziert, um den aktiven Anteil der Dämpfungskraft F_{d,a} zu erhalten. Die gesamte Dämpfungskraft F_{d} ergibt sich dann als Summe von aktiven und passiven Anteil, wobei der passive Anteil ein Produkt von passiven Dämpferanteil Bₚ und Relativgeschwindikeit Vᵣₑₗ ist. Nachdem in dem Steuerschaltkreis die notwendige Dämpfungskraft F_{d} ermittelt wurde, wird ein Steuersignal zur Einstellung dieser Kraft an die Stoßdämpfer abgegeben.

Die Auswirkungen der Signalverarbeitung in den Steuer- und Auswertschaltkreisen werden im folgenden anhand der weiteren Figuren schrittweise erläutert.

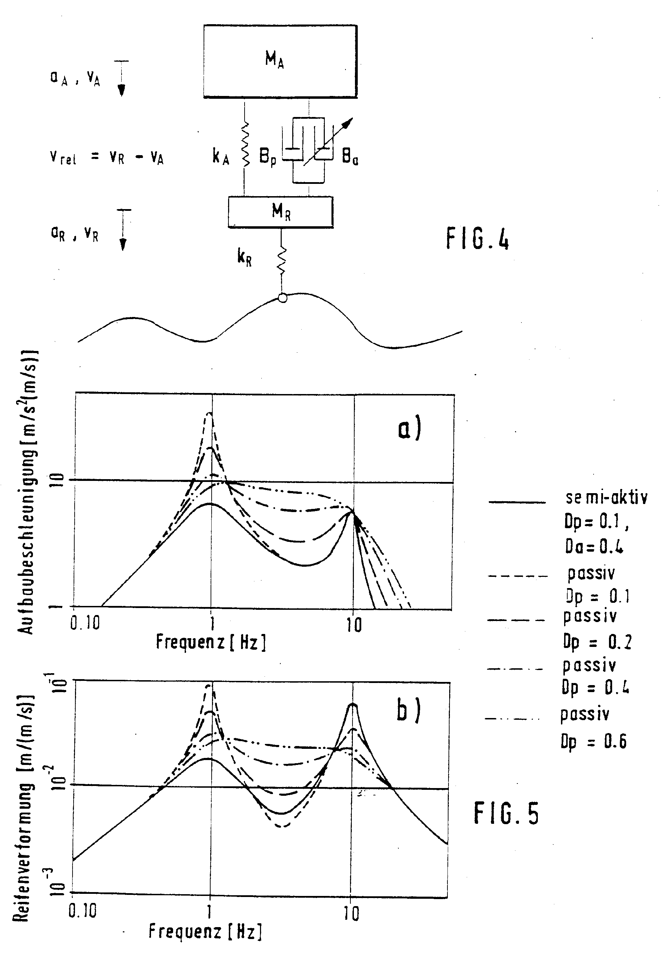

Die Behandlung von Fahrbahnunebenheiten erfolgt mit einem semi-aktiven Regelalgorithmus. Hierzu zerlegt man gedanklich den Dämpfer in einen passiven (festen) und einen aktiven (veränderbaren) Anteil, wie es in Figur 4 dargestellt ist. Dabei steht M jeweils für die Masse, wobei der Index A den Aufbau und der Index R das Rad charakterisiert, k steht für eine Federrate und B für eine Dämpfungsrate, die Indizes a und p werden als Abkürzungen für aktiv und passiv verwendet, wobei sich die Gesamtdämpfungskraft F_{d} bzw. Dämpfungsrate B jeweils aus einem aktiven und einem passiven Anteil zusammensetzt. Die aktive Dämpfungskraft wird nun so gesteuert, daß sie stets (sofern es die Dämpferbewegung gestattet) der Aufbaubewegung entgegenwirkt und proportional zur Aufbaugeschwindigkeit v_{A} ist. Solange kein sicherheitskritischer Fahrzustand eintritt, wird für den passiven Anteil eine möglichst weiche Dämpfungsstufe gewählt.

Die semi-aktive Regelung ermöglicht im Vergleich zu konventionellen Fahrwerksabstimmungen eine wesentliche Komfortverbesserung. In Figur 5 sind die Frequenzgänge von Aufbaubeschleunigung (Maß für Komfort) und Reifenverformung (Maß für Sicherheit) bei verschiedenen Dämpfungen gezeigt. In Figur 5a ist zu sehen, daß die Aufbaubeschleunigungen im gesamten Frequenzbereich bei der semi-aktiven Regelung am geringsten sind, dies bedeutet also hohen Komfort. Für sicherheitskritische Fahrzustände ist diese Strategie jedoch nicht ausreichend, da bei Fahrbahnerregungen im Bereich der Radeigenfrequenz hohe Radlastschwankungen auftreten, dies ist in Figur 5b in der durchgezogenen Linie erkennbar.

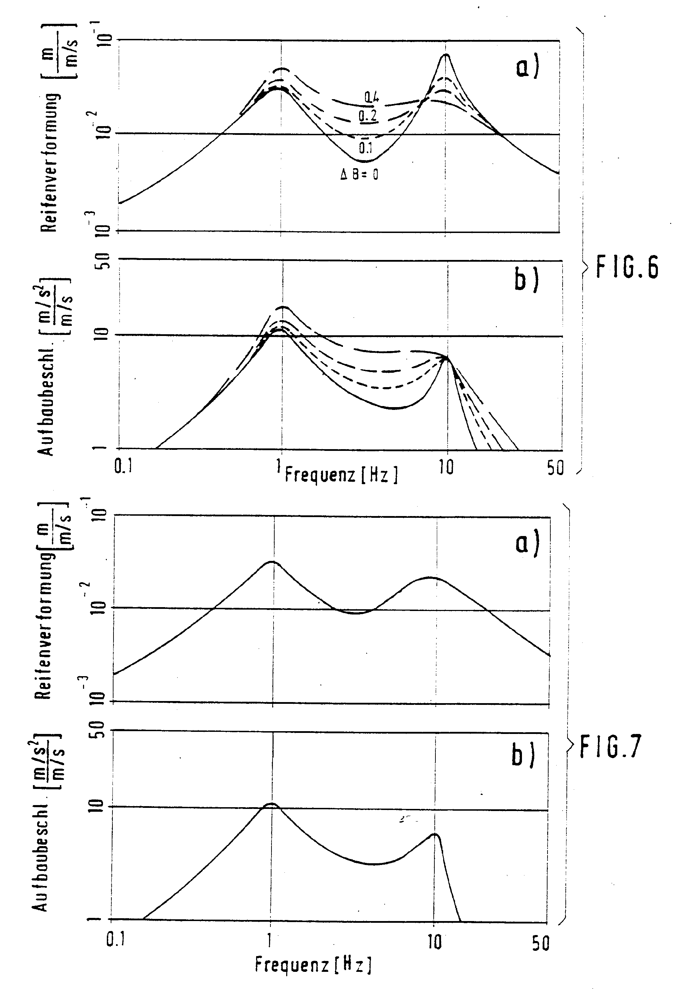

Daher wird der semi-aktiven Regelung ein Kreis überlagert, der sicherheitskritische Manöver erkennt und behandelt. Hierzu wird aus den Größen Fahrzeuglängsgeschwindigkeit, Drosselklappenstellung, Bremsdruck bzw. Pedalweg, Lenkwinkel und anderen ein Sicherheitsniveau ermittelt. Abhängig von diesem Sicherheitsniveau wird nun der passive Dämpfungsanteil um ΔB erhöht und der Verstärkungsfaktor für den aktiven Dämpfungsanteil um ΔB erniedrigt (im Sinne eines Zustandsreglers ist dies äquivalent mit einer stärkeren Rückführung der Radvertikalgeschwindigkeit). Figur 6 zeigt die Auswirkungen dieses Vorgehens auf die Frequenzgänge der Reifenverformung und der Aufbaubeschleunigungen, jeweils sind die Kurven für verschiedenen ΔB's aufgezeichnet.

Eine verstärkte Rückführung der Radvertikalgeschwindigkeit führt jedoch dazu, daß bei dominanten Fahrbahnanregungen im Bereich zwischen der Aufbau- und Radeigenfrequenz größere Radlastschwankungen auftreten als ohne dieses Vorgehen. Mit Hilfe eines Bandpaßfilters werden solche dominanten Fahrbahnerregungen erkannt und ΔB wieder abgeschwächt, die sich daraus ergebenen Frequenzgänge für Reifenverformung und Aufbaubeschleunigung sind in Figur 7 dargestellt.

Der vorgestellte Regelalgorithmus erlaubt es die freien Regelparameter als Funktion des Beladungszustands darzustellen, so wird z.B. bei einer gewissen Fahrzeugquerbeschleunigung ein vollbeladenes Fahrzeug kritischer bewertet als ein Fahrzeug mit Leergewicht. Der Beladungszustand läßt sich auf einfache Weise beispielsweise über die Sensierung des Niveaudruckes ermitteln.

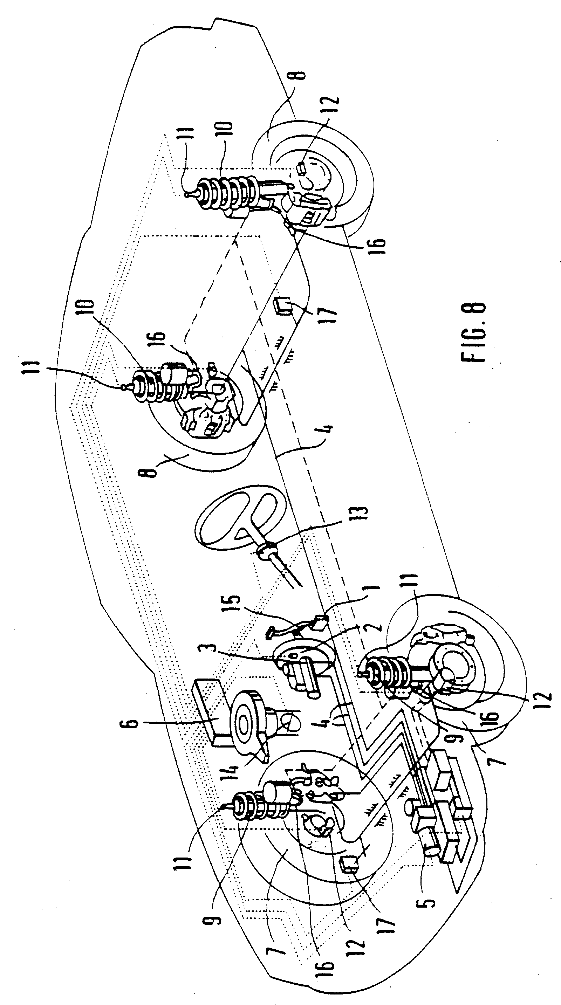

In Figur 8 ist ein Kraftfahrzeug, das mit einer erfindungsgemäßen Vorrichtung zur semi-aktiven Fahrwerksregelung ausgerüstet ist, dargestellt. Man erkennt das Bremspedal 1, durch das in gewohnter Weise ein Bremskraftverstärker 2 und ein Hauptzylinder 3 betätigt werden. Vom Hauptzylinder 3 aus führen hydraulische Leitungen 4 zum ABS-Modulator und -Ventilblock 5, der Ventile zur Regelung des Drucks in den hydraulischen Leitungen zu den Radbremsen enthält, dieser wird von der elektronischen Kontrolleinheit 6 aus gesteuert, die Auswerte- und Steuerschaltkreise sowie den Bandpaßfilter enthält. An den vorderen und hinteren Rädern 7, 8 sind vordere und hintere Stoßdämpfer 9, 10 angebracht. Oberhalb der Stoßdämpfer 9, 10 befinden sich Beschleunigungssensoren 11, die die Aufbaubeschleunigung a_{A} bestimmen, an den Rädern 7, 8 sind Mehrfachfunktionssensoren 12 angebracht, die unter anderem die Radvertikalgeschwindigkeit und das Raddrehverhalten bestimmen. Außerdem ist das Kraftfahrzeug mit einem Lenkwinkelsensor 13, einem Drosselklappenstellungssensor 14, einem Pedalwegsensor 15, einem Niveaudrucksensor 16 und einem Höhenkontrollschalter 17 ausgerüstet. Mit Hilfe des Niveaudrucksensors 16 wird der Beladungzustand des Kraftfahrzeuges ermittelt und der Höhenkontrollschalter 17 gibt ein positives Signal an die elektronische Kontrolleinheit 6 ab, wenn der Fahrzeugaufbau eine gewisse Höhe über dem Boden hat. Das heißt, er gewährleistet unter Umständen abhängig von der Geschwindigkeit eine Minimalbodenfreiheit unabhängig vom Beladungszustand. Alle von den Sensoren erfaßten Größen werden der elektronischen Kontrolleinheit 6 zugeleitet und dort beispielsweise wie im Zusammenhang mit Figur 3 verarbeitet.

Der Pedalweg wird im Verbundregelsystem als Maß für die Fahrzeuglängsverzögerung verwendet. Gegenüber bekannten Fahrwerksregelungen die einen Bremsdrucksensor verwenden, kann also ein Sensor eingespart werden. Da sich jedoch die Relation zwischen Pedalweg und Fahrzeugslängsverzögerung in Abhängigkeit von Verschleiß, Temperatur und Beschaffenheit des Bremsbelages sowie von anderen Einflußgrößen ändert, wird eine adaptive Strategie verfolgt. Während jeder ungeregelten Bremsung, d.h. wenn kein ABS-Einsatz erfolgt, wird die aktuelle Relation zwischen Pedalweg und Fahrzeuglängsverzögerung bestimmt und mit abgespeicherten Werten kombiniert, sowie anschließend in einem Speicher abgelegt. Bei der nächsten Bremsung wird dieser abgespeicherte Wert benutzt, um dem Pedalweg eine Sicherheitsniveau zuzuordnen. Eine direkte Verwendung der Fahrzeuglängsverzögerung, berechnet aus der Fahrzeuggeschwindigkeit, ist nicht sinnvoll, da hier die Reaktion und nicht die Aktion sensiert wird, dies würde zu einem zu späten Umschalten der Dämpfer führen. Zur Kalibrierung des Pedalwegsignals kann die Fahrzeuggeschwindigkeit bzw. ihre ersten beiden zeitlichen Ableitungen allerdings benutzt werden.

Nach der Verarbeitung, die in weiter vorne beschriebener Weise erfolgt, werden entsprechende Stellsignale an die Stoßdämpfer 9, 10 bzw. den ABS-Modulator und -Ventilblock 5 gegeben und so stets ein optimales Fahr- und Bremsverhalten erreicht.

Für die erfindungsgemäße Vorrichtung zur semi-aktiven Fahrwerksregelung können sowohl Kennfelddämpfer als auch Kennliniendämpfer verwendet werden. Außerdem können auch Reifendrucküberwachungs- bzw. Niveauregelsysteme in das Verbundregelsystem integriert werden.

### Bezugszeichenliste

- 1: Bremspedal
- 2: Bremskraftverstärker
- 3: Hauptzylinder
- 4: Hydraulische Leitung
- 5: ABS-Modulator-und -Ventilblock
- 6: Elektronische Kontrolleinheit
- 7: Vorderrad
- 8: Hinterrad
- 9: Vorderer Stoßdämpfer
- 10: Hinterer Stoßdämpfer
- 11: Beschleunigungssensor für den Aufbau
- 12: Mehrfachfunktionssensor für ein Rad
- 13: Lenkwinkelsensor
- 14: Drosselklappenstellungssensor
- 15: Pedalwegsensor
- 16: Niveaudrucksensor
- 17: Höhenkontrollschalter

- F_{d}: Dämpfungskraft
- M: Masse
- k: Federrate
- B: Dämpfungsrate
- s: Weg
- v: Geschwindigkeit
- a: Beschleunigung
- p: Druck
Drosselklappenwinkel (phi)
Lenkwinkel (delta)

### Indizes:

- A: Aufbau
- R: Rad
- B: Bremse
- N: Niveau
- F: Fahrzeug
- P: Pedal
- p: passiv
- a: aktiv
- rel: relativ

## Patentansprüche

1. Verbundregelsystem für Kraftfahrzeuge, mit hydraulisch betätigten Stellgliedern einer Fahrwerksregelung, mit einer Blockierschutzregelung, mit einer Hilfsenergiequelle, mit Sensoren zur Erfassung von Meßgrößen und mit elektronischen Schaltkreisen zur Auswertung der Steuersignale und zur Erzeugung von Stellsignalen für die Fahrwerks- und für die Blockierschutzregelung, dadurch **gekennzeichnet**, daß dieses im wesentlichen aus einem aktiven oder semi-aktiven Fahrwerksregelungssystem mit regelbaren Stoßdämpfern (9,10) und aus einem Blockierschutz- und/oder Antriebsschlupfregelsystem mit Bremsdruckmodulatoren (5) oder Bremsdruck-Steuerventilen besteht,
daß Auswerte- und Steuerschaltkreise (6) zur Verarbeitung von Signalen, die dem Fahrwerksregelung- und dem Blockierschutz-/Antriebsschlupfregelungssystem gemeinsam zugeordnete Sensoren (11 - 17) abgeben, vorhanden sind, daß in den Auswerteschaltkreisen aus vorgegebenen Sensorsignalen bzw. Meßgrößen (V_{F}, φ, Sp, δ, P_{N}) , die die Fahrstabilität des Fahrzeugs beeinflussen, ein Sicherheitsniveau (S) ermittelt wird und
daß in den Steuerschaltkreisen in Abhängigkeit von dem ermittelten Sicherheitsniveau (S) und von dem Bewegungsverhalten des Fahrzeugs und der Räder (v_{A},v_{R}) Stell- oder Betätigungssignale zur Fahrwerks- und Blockierschutz-/Antriebsschlupf-Regelung gewonnen werden.

2. Verbundregelsystem nach Anspruch 1, dadurch **ge****kennzeichnet**, daß die Auswerte- und Steuerschaltkreise für ABS/ASR und Fahrwerksregelung in einem Bauelement (Mikrochip) angeordnet sind.

3. Verbundregelsystem nach Anspruch 1 oder 2, dadurch **gekennzeichnet**, daß die Sensoren (11 - 17) folgende Meßgrößen erfassen bzw. Daten zu ihrer Ermittlung aufnehmen:
Fahrzeuglängsgeschwindigkeit (v_{F})
Raddrehgeschwindigkeit
Lenkwinkel (δ)
Radvertikalgeschwindigkeit (v_{R}) und Aufbaugeschwindigkeit (v_{A}) bzw. Dämpfer- und/oder Federweg (Vᵣₑₗ)

4. Verbundregelsystem nach Anspruch 3, dadurch **ge****kennzeichnet**, daß von den Sensoren-(11 - 17) zusätzlich eine der folgenden Meßgrößen bzw. Daten ihrer Ermittlung erfaßt wird:
Drosselklappenstellung (φ)
Motormoment
Bremsdruck (p_{B})
Pedalweg (sₚ)
Beladungszustand

5. Verbundregelsystem nach einem oder mehreren der vorhergehenden Anpsprüche, dadurch **gekennzeich****net**, daß eine semi-aktive Fahrwerksregelung vorgesehen ist, die aus einem passiven (festen) und einem aktiven (veränderlichen) Dämpferanteil (Bₚ,Bₐ) besteht.

6. Verbundregelsystem nach Anspruch 5, dadurch **ge****kennzeichnet**, daß bei einem vorgegebenen Sicherheitsniveau die Steuerschaltkreise ein Steuersignal abgeben, durch das der aktive Dämpferanteil (Bₐ) um einen Betrag ΔB vermindert und der passive Dämpfer- anteil (Bₚ) um einen Betrag ΔB erhöht wird gegenüber einer Normaleinstellung.

7. Verbundregelsystem nach Anspruch 5, dadurch **ge****kennzeichnet**, daß im Signalweg zwischen den Auswerte- und den Steuerschaltkreisen ein Bandpaßfilter angeordnet ist, dessen Durchlaßbereich größenordnungsmäßig zwischen Aufbau- und Radeigenfrequenz, insbesondere zwischen 1 und 15 Hz, liegt, daß dem Bandpaßfilter das Ausgangssignal eines die Radvertikalbeschleunigung erfassenden Sensors (12) zugeführt wird und daß die Steuerschaltkreise nur dann ein Steuersignal abgeben, durch das aktiver und passiver Dämpferanteil (Bₐ,Bₚ) vermindert bzw. erhöht werden, wenn das dem Bandpaßfilter zugeführte Signal in seinem Durchlaßbereich liegt.

8. Verbundregelsystem nach einem oder mehreren der vorher gehenden Ansprüche, dadurch **gekennzeich****net**, daß der Beladungszustand durch die Auswerteschaltkreise durch Auswertung des Ausgangssignals mindestens eines den Niveaudruck (P_{N}) in einem Stoßdämpfer erfassenden Sensors (16) ermittelbar ist.

9. Verbundregelsystem nach einem oder mehreren der vorhergehenden Ansprüche, dadurch **gekennzeich****net**, daß die Fahrzeuglängsverzögerung durch die Auswerteschaltkreise durch Auswertung des Ausgangssignals eines den Pedalweg (s_{P}) eines Bremspedals erfassenden Sensors (15) ermittelbar ist.

10. Verbundregelsystem nach Anspruch 8, dadurch **ge****kennzeichnet**, daß von den Auswerteschaltkreisen bei jedem ungeregelten Bremsvorgang die aktuelle Relation zwischen Pedalweg (s_{P}) und Fahrzeuglängsverzögerung ermittelbar ist, daß die ermittelte Relation in einem Speicher abspeicherbar ist, und daß zur Ermittlung des Sicherheitsniveaus (S) jeweils auf die zuletzt abgespeicherten Werte zurückgreifbar ist.

11. Verbundregelsystem nach einem oder mehreren der vorhergehenden Ansprüche, dadurch **gekennzeich****net**, daß in Abhängigkeit von den von den Auswerteschaltkreisen ermittelten Beschleunigungen bzw. Verzögerungen sowie deren zeitlichen Ableitungen die Steuerschaltkreise Steuersignale abgeben, die eine Verminderung des Nickens des Kraftfahrzeuges bewirken.

12. Verbundregelsystem nach einem oder mehreren der vorhergehenden Ansprüche, dadurch **gekennzeich****net**, daß in den Auswertschaltkreisen die Ausgangssignale der die Radvertikalgeschwindigkeiten (v_{R}) oder Dämpfergeschwindigkeiten (vᵣₑₗ) erfassenden Sensoren (12) mit den Ausgangssignalen der die Raddrehgeschwindigkeiten erfassenden Sensoren (12) verknüpfbar sind, und daß durch diese Verknüpfung der Unterschied zwischen einer schlechten Wegstrecke und Reibwertveränderungen des Untergundes ermittelbar ist.

13. Verbundregelsystem nach einem oder mehreren der vorhergehenden Ansprüche, dadurch **gekennzeich-** **net**, daß in den Auswertschaltkreisen das Ausgangssignal des Lenkwinkelsensors (13) mit den Ausgangssignalen der die Raddrehgeschwindigkeit erfassenden Sensoren (12) verknüpfbar ist, und daß durch diese Verknüpfung von den Steuerschaltkreisen die zur Giermomentbeeinflußung bei auf beiden Fahrzeugseiten unterschiedlichen Reibwerten notwendigen Steuersignale abgebbar sind.

14. Verbundregelsystem nach einem oder mehreren der vorhergehenden Ansprüche, dadurch **gekennzeich****net**, daß in den Auswertschaltkreisen das Ausgangssignal des Lenkwinkelsensors (13) mit den Ausgangssignalen der die Raddrehgeschwindigkeit erfassenden Sensoren (12) verknüpfbar ist, und daß durch diese Verknüpfung von den Steuerschaltkreisen bei ASR-Funktion und gleichzeitig hohem Seitenführungsbedarf Steuersignale zur Steuerung des Antriebsmoments abgebbar sind.

15. Verbundregelsystem nach einem oder mehreren der vorhergehenden Ansprüche, dadurch **gekennzeich****net**, daß in Abhängigkeit vom Ausgangssignal des den Beladungszustand ermittelnden Sensors (Niveaudrucksensor 16) die Hinterräder des Kraftfahrzeuges bei einer geregelten Bremsung nach dem select-low" -Prinzip bzw. einzeln regelbar sind.

## Claims

1. A compound control system for automotive vehicles comprising hydraulically operated control members of a vehicle suspension system, comprising an anti-lock control system, an auxiliary-energy source, sensors for gathering measured quantities and electronic circuits for assessing the sensor signals and for generating corrective signals for the suspension control system and for the anti-lock control system,
**characterised** in that the system substantially comprises an active or semi-active suspension control system with controllable shock absorbers (9, 10) and an anti-lock and/or traction slip control system with braking pressure modulators (5) or braking pressure control valves, in that analyzing and controlling circuits (6) are provided for processing signals issued by sensors (11 to 17) which are jointly associated with the suspension control system and the anti-lock control/traction slip control system,
in that the analyzing circuits determine a safety level (S) from sensor signals or, respectively, measured quantities (V_{F}, φSp, δ, p_{N}), which influence the driving stability of the vehicle,
and in that corrective signals or actuating signals for the suspension control and anti-lock control/traction slip control are obtained in the controlling circuits in dependence on the determined safety level (S) and the motional behaviour of the vehicle and the wheels (v_{A}, v_{R}).

2. A compound control system as claimed in claim 1, **characterised** in that the analyzing and controlling circuits for ABS/TSC and suspension control are arranged in one structural element (microchip).

3. A compound control system as claimed in claim 1 or 2,
**characterised** in that the sensors (11 to 17) record the following measured quantities or gather data to determine them:
lateral vehicle speed (v_{F})
rotational wheel speed
steering angle (δ)
vertical wheel speed (v_{R}) and chassis speed (v_{A}), or shock absorber travel and/or spring travel (vᵣₑₗ), respectively.

4. A compound control system as claimed in claim 3, **characterised** in that the sensors (11 to 17) in addition record one of the following measured quantities or gather data to determine them:
throttle flap position (φ)
engine torque
braking pressure (p_{B})
pedal travel (sₚ)
load condition.

5. A compound control system as claimed in any one or more of the preceding claims,
**characterised** in that there is provision of a semi-active suspension control which is composed of a passive (invariable) and an active (variable) shock absorber portion (Bₚ, Bₐ).

6. A compound control system as claimed in claim 5, **characterised** in that, when a safety level is predetermined, the controlling circuits issue a control signal by which the active shock absorber portion (Bₐ) is reduced by an amount ΔB and the passive shock absorber portion (Bₚ) is increased by an amount ΔB compared to a normal adjustment.

7. A compound control system as claimed in claim 5, **characterised** in that in the signal path between the analyzing and the controlling circuits a band pass filter is arranged, the pass-band of which ranges between chassis frequency and natural wheel frequency in terms of size, in particular between 1 and 15 hertz, in that the band pass filter is supplied with the output signal of a sensor (12) ascertaining the vertical wheel acceleration, and in that the controlling circuits issue a control signal causing reduction and/or increase of the active and passive shock absorber portion (Bₐ, Bₚ) only if the signal supplied to the band pass filter lies in its pass-band.

8. A compound control system as claimed in any one or more of the preceding claims,
**characterised** in that the load condition is determinable by the analyzing circuits by way of analysis of the output signal of at least one sensor (16) gathering the level pressure (p_{N}) in a shock absorber.

9. A compound control system as claimed in any one or more of the preceding claims,
**characterised** in that the lateral vehicle deceleration is determinable by the analyzing circuits by way of analysis of the output signal of a sensor (15) which ascertains the pedal travel (sₚ) of a brake pedal.

10. A compound control system as claimed in claim 8, **characterised** in that the actual relation between pedal travel (sₚ) and lateral vehicle deceleration is determinable by the analyzing circuits on each uncontrolled braking action, in that the ascertained relation is adapted to be stored in a memory, and in that the values stored the last can be referred to in each case for defining the safety level (S).

11. A compound control system as claimed in any one or more of the preceding claims,
**characterised** in that the controlling circuits issue control signals, which bring about reduced nose-diving of the automotive vehicle, in dependence on the accelerations and/or decelerations as well as the time derivatives thereof determined in the analyzing circuits.

12. A compound control system as claimed in any one or more of the preceding claims,
**characterised** in that, in the analyzing circuits, the output signals of the sensors (12) ascertaining the vertical wheel speeds (v_{R}) or absorber speeds (vᵣₑₗ) are adapted to be linked with the output signals of the sensors (12) ascertaining the rotational wheel speeds, and in that owing to this linking the difference between a poor road surface and friction value variations of the ground can be determined.

13. A compound control system as claimed in any one or more of the preceding claims,
**characterised** in that, in the analyzing circuits, the output signal of the steering-angle sensor (13) is adapted to be linked with the output signals of the sensors (12) ascertaining the rotational wheel speed, and in that this linking enables the controlling circuits to issue the control signals necessary for influencing the yawing torque in the presence of different friction values on both vehicle sides.

14. A compound control system as claimed in any one or more of the preceding claims,
**characterised** in that, in the analyzing circuits, the output signal of the steering-angle sensor (13) is adapted to be linked with the output signals of the sensors (12) ascertaining the rotational wheel speed, and in that this linking enables the controlling circuits to issue control signals to control the traction torque in the presence of TSC-function and, simultaneously, great demand on cornering ability.

15. A compound control system as claimed in any one or more of the preceding claims,
**characterised** in that, in dependence on the output signal of the sensor determining the load condition (level pressure sensor 16), the rear wheels of the automotive vehicle can be controlled according to the "select-low" principle and/or individually when controlled braking is performed.

## Revendications

1. Système de régulation combinée pour véhicule automobile, comprenant des organes de réglage faisant partie d'une régulation de châssis et actionnés par voie hydraulique, une régulation antiblocage, une source d'énergie auxiliaire, des capteurs, servant à relever des grandeurs mesurées, et des circuits électroniques servant à exploiter les signaux de commande et à produire des signaux de réglage destinés à la régulation de châssis et à la régulation antiblocage, caractérisé en ce qu'il est constitué essentiellement d'un système de régulation de châssis de type actif ou semi-actif, à amortisseurs réglables (9, 10), et d'un système de régulation antiblocage et/ou de régulation du glissement de traction, à modulateurs de pression de freinage (5) ou à valves de commande de pression de freinage, en ce qu'il est prévu des circuits d'exploitation et de commande (6) servant à traiter des signaux que des capteurs associés communs (11-17) envoient au système de régulation de châssis et au système de régulation antiblocage/régulation du glissement de traction, en ce qu'un niveau de sécurité (S) est déterminé dans les circuits d'exploitation à partir de signaux de capteur ou grandeurs mesurées (V_{F}, φ, s_{P}, ∂, p_{N}), préfixés, qui influent sur la stabilité de conduite du véhicule et en ce que des signaux de réglage ou d'actionnement destinés à la régulation du châssis et à la régulation antiblocage et/ou régulation du glissement de traction sont obtenus dans les circuits de commande en fonction du niveau de sécurité (S) déterminé et du comportement de déplacement du véhicule et des roues (v_{A}, v_{R}).

2. Système de régulation combinée suivant la revendication 1, caractérisé en ce que les circuits d'exploitation et de commande correspondant à la régulation antiblocage/régulation du glissement de traction et à la régulation de châssis sont disposés dans un même élément structurel (micropuce).

3. Système de régulation combinée suivant l'une des revendications 1 et 2, caractérisé en ce que les capteurs (11-17) détectent les grandeurs mesurées suivantes, ou reçoivent des données permettant de les déterminer:
vitesse longitudinale du véhicule (v_{F}),
vitesse angulaire des roues,
angle de braquage(δ),
vitesse verticale des roues (v_{R}) et vitesse de la carrosserie (v_{A}) ou course des amortisseurs et/ou de la suspension (vᵣₑₗ).

4. Système de régulation combinée suivant la revendication 3, caractérisé en ce que l'une des grandeurs mesurées suivantes, ou des données permettant sa détermination, sont détectées en supplément par les capteurs (11-17):
position du papillon des gaz(φ),
couple moteur,
pression de freinage (p_{B}),
course de la pédale (s_{P}),
état de la charge.

5. Système de régulation combinée suivant l'une quelconque des revendications précédentes, caractérisé en ce qu'il est prévu une régulation de châssis de type semi-actif qui est constituée d'une fraction d'amortisseur passive (fixe) et d'une fraction d'amortisseur active (variable) (Bₚ, Bₐ).

6. Système de régulation combinée suivant la revendication 5, caractérisé en ce que, pour un niveau de sécurité préfixé, les circuits de commande fournissent un signal de commande au moyen duquel, en comparaison d'un réglage normal, la fraction active d'amortisseur (Bₐ) est diminuée d'une valeur ΔB et la fraction passive d'amortisseur (Bₚ) est augmentée d'une valeur ΔB.

7. Système de régulation combinée suivant la revendication 5, caractérisé en ce que, sur le trajet des signaux qui est situé entre les circuits d'exploitation et les circuits de commande, il est disposé un filtre passe-bande dont la bande passante, en ce qui concerne sa dimension, est située entre la fréquence de la carrosserie et la fréquence propre des roues, notamment entre 1 et 15 Hz, en ce que le signal de sortie d'un capteur (12) détectant l'accélération verticale des roues est envoyé au filtre passe-bande et en ce que les circuits de commande ne fournissent alors un signal de commande, au moyen duquel la fraction active et la fraction passive d'amortisseur (Bₐ, Bₚ) sont respectivement diminuée et augmentée, que lorsque le signal envoyé au filtre passe-bande est situé dans sa bande passante.

8. Système de régulation combinée suivant l'une quelconque des revendications précédentes, caractérisé en ce que l'état de charge peut être déterminé au moyen des circuits d'exploitation par exploitation du signal de sortie d'au moins un capteur (16) détectant la pression de niveau (p_{N}) dans un amortisseur.

9. Système de régulation combinée suivant l'une quelconque des revendications précédentes, caractérisé en ce que la décélération longitudinale du véhicule peut être déterminée au moyen des circuits d'exploitation par exploitation du signal de sortie d'un capteur (15) détectant la couse (s_{P}) d'une pédale de frein.

10. Système de régulation combinée suivant la revendication 8, caractérisé en ce qu'à partir des circuits d'exploitation et pour chaque opération de freinage ne faisant pas l'objet d'une régulation, la relation effective entre la course de la pédale (s_{P}) et la décélération longitudinale du véhicule peut être déterminée, en ce que la relation déterminée peut être rangée dans une mémoire et en ce que, pour déterminer le niveau de sécurité (S), il est chaque fois possible de se rapporter aux valeurs mises en mémoire en dernier lieu.

11. Système de régulation combinée suivant l'une quelconque des revendications précédentes, caractérisé en ce qu'en fonction des accélérations ou décélérations déterminées par les circuits d'exploitation et de leurs dérivées par rapport au temps, les circuits de commande fournissent des signaux de commande qui provoquent une diminution de tangage du véhicule automobile.

12. Système de régulation combinée suivant l'une quelconque des revendications précédentes, caractérisé en ce que, dans les circuits d'exploitation, les signaux de sortie des capteurs (12) détectant les vitesses verticales (v_{R}) des roues ou les vitesses (vᵣₑₗ) des amortisseurs peuvent être combinés aux signaux de sortie des capteurs (12) détectant les vitesses angulaires des roues et en ce que cette combinaison permet de déterminer la différence entre une voie de circulation en mauvais état et des différences de coefficient de frottement du sol.

13. Système de régulation combinée suivant l'une quelconque des revendications précédentes, caractérisé en ce que, dans les circuits d'exploitation, le signal de sortie du capteur d'angle de braquage (13) peut être combiné aux signaux de sortie des capteurs (12) détectant la vitesse angulaire des roues et en ce que cette combinaison des circuits de commande permet de fournir des signaux de commande qui influent sur le couple de lacet dans le cas de coefficients de frottement qui diffèrent sur les deux côtés du véhicule.

14. Système de régulation combinée suivant l'une quelconque des revendications précédentes, caractérisé en ce que, dans les circuits d'exploitation, le signal de sortie du capteur d'angle de braquage (13) peut être combiné aux signaux de sortie des capteurs (12) détectant la vitesse angulaire des roues et en ce que cette combinaison des circuits de commande permet de fournir, dans le cas d'une fonction ASR et d'un besoin de guidage latéral élevé qui est simultané, des signaux de commande servant à commander le couple moteur.

15. Système de régulation combinée suivant l'une quelconque des revendications précédentes, caractérisé en ce qu'en fonction du signal de sortie du capteur déterminant l'état de charge (capteur de pression de niveau 16), les roues arrière du véhicule automobile peuvent être réglées, lors d'un freinage faisant l'objet d'une régulation, suivant le principe "select-low" ou d'une manière individuelle.
